# EUROPEAN PATENT APPLICATION

(11) **EP 4 404 128 A1**
(43) Date of publication of application: **24.07.2024**
(21) Application number: 24152154.1
(22) Date of filing: 16.01.2024
(51) Int. Cl.: G06Q 40/03, G06Q 40/06

(54) **SYSTEMS AND METHODS TO EVALUATE A USER'S FINANCIAL SCORE**

(30) Priority: 17.01.2023 US 202363439342 P
(71) Applicant: My Life Kit Ltd, London EC2N 4AJ (GB)
(72) Inventor: TOSCANO, Romano, GX11 1AA Gibraltar (GI)
(74) Representative: Patel, Nikesh

(57) **Abstract**

Systems and methods to evaluate a user's financial score are provided. The method includes obtaining health data indicative of health of a user. The method also includes determining, based on the health data, a health score of the user. The method further includes obtaining credit data indicative of a credit score of the user. The method further includes determining, based on the credit data, a credit score of the user. The method further includes obtaining environment data indicative of a current environment of the user. The method further includes determining, based on the environment data, an environment score of the user. The method further includes determining, based on a combination of the health score, the credit score, and the environment score, a financial score of the user.

## Description

### BACKGROUND

The present disclosure relates generally to systems and methods to evaluate a user's financial score.

Numerical values that express a person's creditworthiness are sometimes used by financial institutions and vendors to determine whether to approve or to deny a financial transaction such as a purchase, a loan, a mortgage, or another type of financial transaction. These numerical values are often based on the person's payment history, the person's debt, the personal credit, length of the person's credit history, and similar metrics. However, these metrics do not always accurately represent the person's creditworthiness. Further, these metrics are static over a long period of time (such as a month), during which, the numerical value stays constant.

### Brief Description of the Drawings

Illustrative embodiments of the present invention are described in detail below with reference to the attached drawing figures, which are incorporated by reference herein, and wherein:
Figure 1 is a network environment for evaluating the financial score of a user;
Figure 2A is an illustration of a process to determine a user's health score;
Figure 2B is an illustration of a process to determine a user's environment score;
Figure 2C is an illustration of a process to determine a world score;
Figure 3A is an illustration of an exemplary user interface containing a user's financial score and components of the user's financial score displayed on a smartphone;
Figure 3B is an illustration of another exemplary user interface containing the user's financial score and components of the user's financial score displayed on a laptop device;
Figure 4 is a system diagram of a financial score evaluation system of figure 1;
Figure 5 is a flowchart of a process to evaluate a user's financial score; and
Figure 6 is a flowchart of another process to evaluate a user's financial score.

The illustrated figures are only exemplary and are not intended to assert or imply any limitation with regard to the environment, architecture, design, or process in which different embodiments may be implemented.

### Detailed Description

In the following detailed description of the illustrative embodiments, reference is made to the accompanying drawings that form a part hereof. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the embodiments described herein, the description may omit certain information known to those skilled in the art. The following detailed description is, therefore, not to be taken in a limiting sense, and the scope of the illustrative embodiments is defined only by the appended claims.

The present disclosure relates to systems and methods to evaluate a user's financial score. As referred to herein, financial scores are numerical values that indicate whether a person should be approved or denied a financial transaction, such as a purchase, a loan, a mortgage, or another type of financial transaction.

Currently, many financial institutions and vendors utilize a person's credit scores to determine whether a financial transaction with the person should be approved or denied. As referred to herein, a financial transaction is any type of transaction of any monitory value. Examples of financial transactions include, but are not limited to, loans, mortgages, sales (products and services), rentals, and other types of transactions of monetary value. For example, a person with a credit score of 500 points will likely be denied for a loan, or will be offered a loan at a higher interest rate, whereas a person with a credit score of 800 points may be approved for a loan at a lower interest rate.

While a person's credit scores provide one indication of creditworthiness, the systems and methods described herein are configured to obtain, analyze and evaluate additional aspects of the person's wellbeing, the person's environment, and world events to generate more comprehensive financial scores that provide a more comprehensive representation of the person's financial wellbeing, and whether a financial transaction involving the person should be approved or denied. Further, a person's credit scores typically update on a monthly basis, and are static within the month. For example, a person who has a perfect credit score with a credit rating institution on January 1, 2023, but maximizes his or her credit lines on January 2, 2023, and misses all credit card payments still has a perfect credit score until the next time his or her credit score is updated by the credit rating institution, such as on February 1, 2023. If the person applies a loan to purchase an exotic vehicle on January 15, 2023, the dealer will likely approve the loan based on the perfect credit score, which remains static until the credit score is next updated.

The financial scores that are generated by the systems and methods described herein are dynamic scores that change based on multiple factors including a person's health, the person's environment, regional and global events, and other factors described herein that may impact whether a financial transaction should be approved, denied, or whether additional information should be obtained from the person. As referred to herein, dynamic scores are values that are constantly changing or change within the threshold period of time which in which, static scores remain constant within the threshold period of time. For example, the user's health score, which forms a component of the user's financial score is updated each time the user engages in physical activity. Further, the user's environment score, which forms a second component of the user's financial score, is updated each time the user travels to a new location. Further, the world score, which forms a third component of the user's financial score, is dynamically updated to account for current world events. As such, the user's financial score is a dynamic score that is constantly updated to account for not only the user's physical and emotionally wellbeing, but also the user's environment, and current world events.

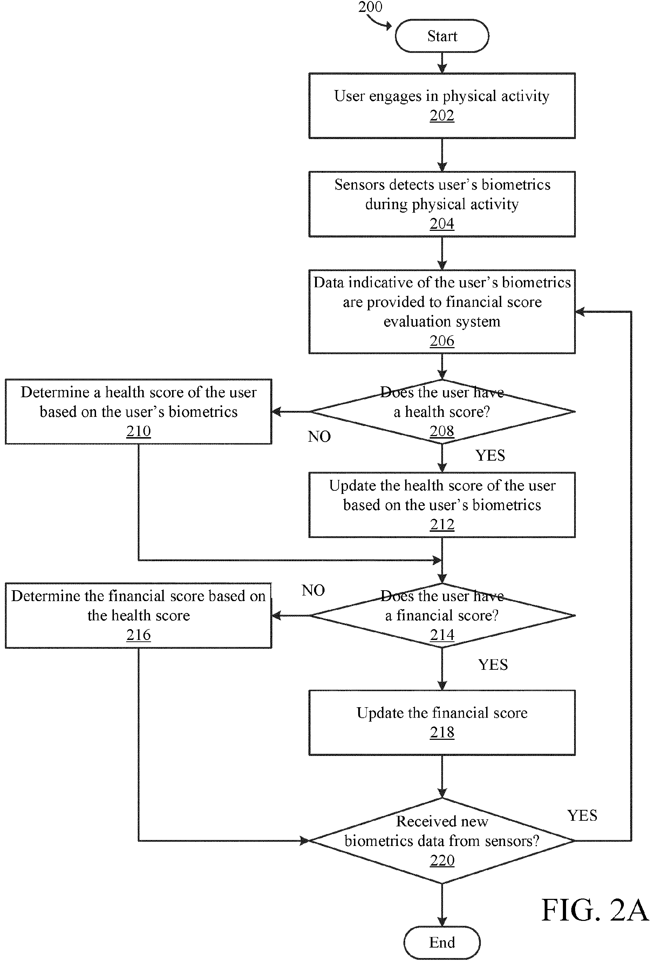

A financial score evaluation system is configured to obtain health data indicative of the health of the user. Examples of health data include, but are not limited to, data indicative of the user's heart rate, temperature, blood pressure, sleeping cycle (and sleeping pattern), exercise routine, active energy, resting energy, energy expenditure, steps taken, stairs climbed, and other data indicative of the current and historical health of the user. In some embodiments, the financial score evaluation system is accessible to sensors that detect the user's activities (or lack of activities) to obtain current health data from the sensors. For example, the financial score evaluation system is configured to request sensors of a wearable device to continuously monitor the user's heart rate, and provide the user's heart rate and changes to the user's heart rate to the financial score evaluation system. The user's heartrate and changes to the user's heart rate are utilized by the financial score evaluation system to determine one metric of the user's health score. Similarly, the financial score evaluation system is configured to request sensors of the user's electronic device to monitor the numbers of steps the user has taken, where the numbers of steps the user has taken is utilized by the financial score evaluation system to determine a second metric of the user's health. In some embodiments, the financial score evaluation system is configured to obtain (with the user's consent) up-to-date medical records of the user to determine additional metrics of the user's health. Additional descriptions of health data, components of the user's health score, and operations performed by the financial score evaluation system to obtain the user's health data and generate/update the user's health score are provided herein and illustrated in at least figures 2A, 3A, 3B, 5, and 6.

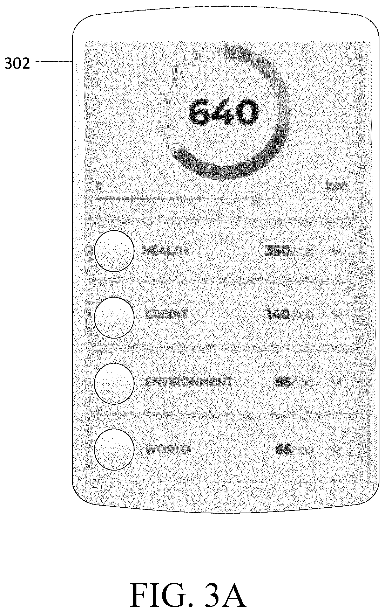

The financial score evaluation system is also configured to obtain credit data indicative of a credit score of the user. As referred to herein, credit data obtained by the financial score evaluation system include any financial data indicative of the user's creditworthiness. For example, the financial score evaluation system is configured to (with the user's consent) track the user's daily expenditures, or request (with the user's consent) a third-party device or application to provide the financial score evaluation system with the user's daily expenditures. The financial score evaluation system analyzes the user's daily expenditures, the total amount, and changes from historical expenditures; and determines components of a credit score based on the user's daily expenditures, the total amount, and changes from historical expenditures. It is noted that in contrast to static credit scores generated by traditional credit rating agencies, a credit score of the user that is generated by the systems and methods described herein is a dynamic score that takes into account of the dynamically changing financial data of the user. Additional descriptions of the credit score of the user and operations performed by the financial score evaluation system to analyze the user's credit data and generate/update the user's credit score are provided herein and illustrated in at least figures 3A, 3B, 5, and 6.

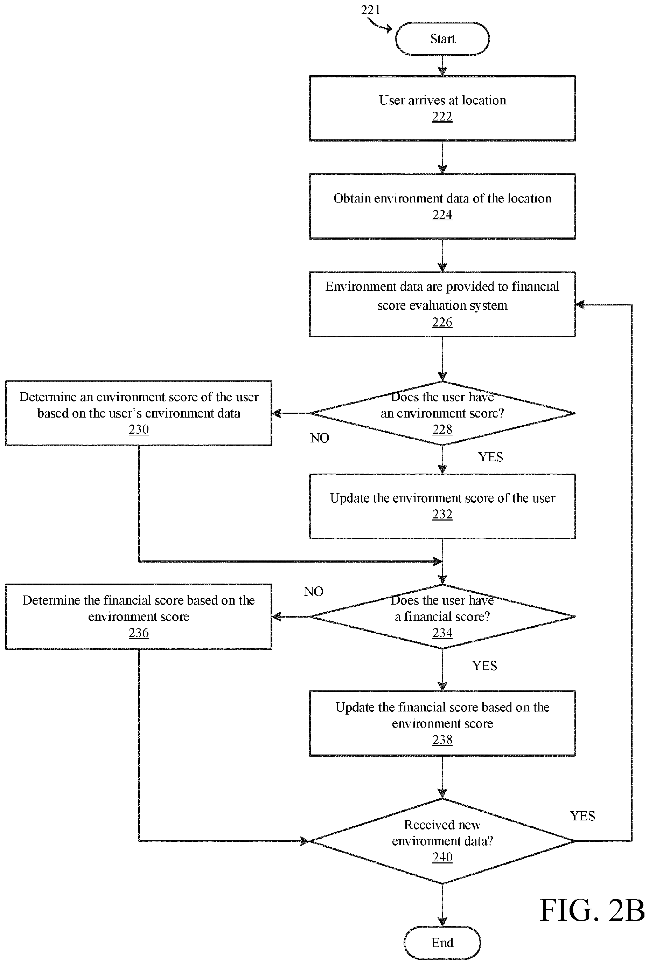

The financial score evaluation system is also configured to obtain environment data indicative of a current environment of the user. As referred to herein, environment data refer to any data indicative of the user's current location and within a threshold range of the user's current location. Examples of environment data include, but are not limited to, the temperature at the user's location, the precipitation at the user's location, air pollution at the user's current location, ultra-violate light exposure at the current location, crime rate at the user's location, traffic congestion at the user's location, presence of historical or ongoing conflicts at the user's location, the presence of historical or ongoing manmade or natural disasters at the user's current location, the life expectancy at the user's current location, and other data indicative of the user's current location and areas within a threshold range of the user's current location. For example, the financial score evaluation system obtains data indicative of the current temperature, the current air pollution, the humidity of the current location, and the number of reported crimes within a range of the current location, and utilizes the data to determine four metrics of the environment score based on the current temperature and changes to the current temperature, the current air pollution and changes to the current air pollution, the current humidity and changes to the current humidity, and the number of reported crimes and types of crimes, respectively. As such, the user's environment score dynamically changes based on the user's current location as well as different statics (e.g., environmental, crime, human conflicts, and other types of statics) and changes to the statics of the current location and within a threshold range of the current location. Additional descriptions of environment score of the user and operations performed by the financial score evaluation system to analyze the user's environment data and generate/update the user's environment score are provided herein and illustrated in at least figures 2B, 3A, 3B, 5, and 6.

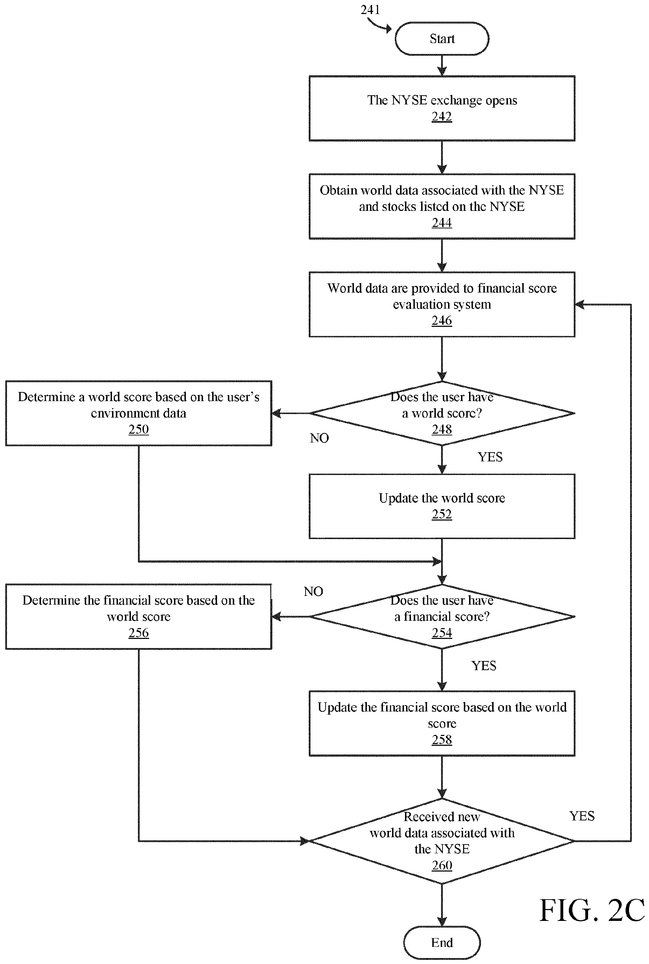

The financial score evaluation system is also configured to obtain world data indicative of one or more events around the world or within a region of the world. As referred to herein, world data include any data indicative of current or historical, and regional or world events. Examples of world data include, but are not limited to, data indicative of current and historical geopolitical tensions, global financial health and trends (e.g., inflation, deflation, etc.), financial market (stocks, bonds, futures, forex, and other types of financial markets) performances, currency values, current, historical and predicted disasters, and other data indicative of one or more events around the world or within a region of the world. For example, the financial score evaluation system obtains data indicative of the current geopolitical tensions in Europe, daily performance of the Dow Jones Industrial Average, expected decision by the Federal Reserve to raise interest rates to combat inflation, and the appreciation of the USD relative to other currencies, and utilizes the data to determine four metrics of the world score based on the current geopolitical tensions in Europe, daily performance of the Dow Jones Industrial Average, expected decision by the Federal Reserve to increase interest rates to combat inflation, and the appreciation of the USD relative to other currencies, respectively. As such, the world score dynamically changes based on continuously occurring and changing regional and global events. Additional descriptions of world score and operations performed by the financial score evaluation system to analyze the world data and generate/update the world score are provided herein and illustrated in at least figures 2C, 3A, 3B, 5, and 6.

The financial score evaluation system combines scores associated with the different categories (such as the health score, the credit score, the environment score, and the world score) to form the financial score of the user, which dynamically changes as a result of changes to one or more categories (sub-categories, sub-sub-categories, etc.), and different metrics of each category. In some embodiments, all categories are given the same weight. In some embodiments, the financial score evaluation system assigns different weights to different categories of the user's financial score. For example, the user's credit score is assigned a first weight, the user's health score is assigned a second weight, the user's environment score is assigned a third weight, and the world score is assigned a fourth weight, where the first weight is greater than the second weight, the second weight is greater than the third weight, and the third weight is greater than the fourth weight. In some embodiments, the financial score evaluation system dynamically readjusts the weights of the different categories. For example, the financial score evaluation system assigns the user's environment score a first weight when the user is 3,000 miles away from an armed conflict zone, and assigns the user's environment score a second weight that is greater than the first weight when the user is within 15 miles of the armed conflict zone.

The financial score evaluation system is also configured to provide (or request an electronic device to provide) user interfaces containing the user's financial score, components of the user's financial score (e.g., health score, credit score, environment score, and world score), and changes to the financial score and components of the financial score for display. In some embodiments, the financial score evaluation system is also configured to provide a recommendation to the user to improve the user's financial score or components of the user's financial score. For example, the financial score evaluation system determines that the user will improve the user's health score by 10 points by walking one thousand more steps, provides the recommendation to the user's electronic device, tracks (or requests a wearable device of the user to track) the number of steps the user has taken, dynamically updates the user's health score and metrics of the user's health score that is based on the number of steps taken, and provides (or requests the user's electronic device to provide) the current health score and changes to the current health score for display.

In some embodiments, the financial score evaluation system is formed from multiple electronic devices, and is configured to request different electronic devices to perform different operations described herein to balance the load of the electronic devices, thereby improving the overall performance of the electronic devices, and reducing the power and other cost associated with the electronic devices. For example, the financial score evaluation system requests a first backend electronic device to perform operations to determine the user's health score, a second backend electronic device to perform operations to determine the user's credit score, and a third backend electronic device to perform operations to determine the user's environment score and the world score. In some embodiments, the financial score evaluation system is configured to request different electronic devices to perform operations described herein to determine different users' financial score of components of the users' financial score. For example, the financial score evaluation system requests the first backend electronic device to determine the user's financial score, the second backend electronic device to determine a second user's financial score, and the third backend electronic device to determine a third user's financial score. In some embodiments, the financial score evaluation system dynamically balances the workloads of the three electronic devices as the financial score evaluation system receives additional requests to determine the financial scores of additional users.

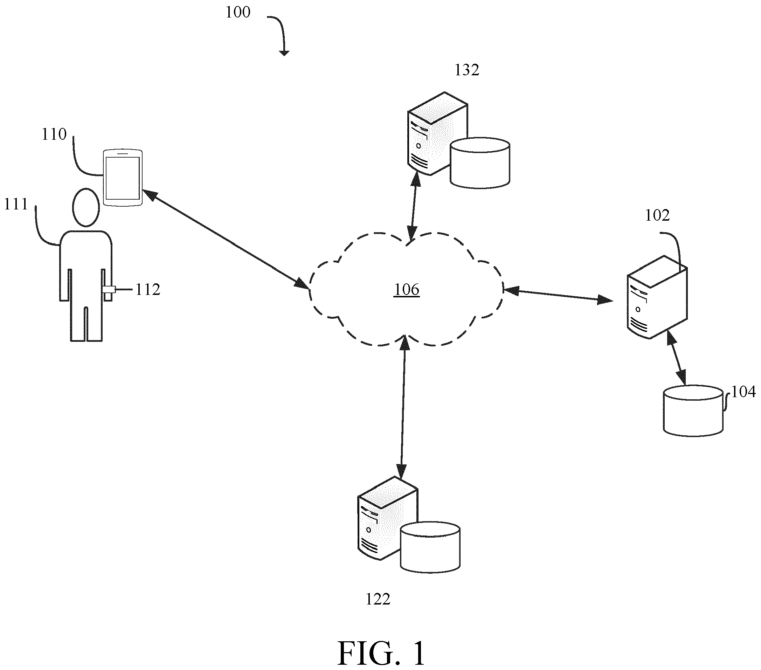

In some embodiments, the financial score evaluation system provides (with the user's consent) the user's financial score and components of the user's financial score to a financial institution, a vendor, or another third party to determine whether a financial transaction that involves the user should be approved or denied. In some embodiments, the financial score evaluation system provides (with the user's consent) the user's financial score and components of the user's financial score to a financial institution, a vendor, or another third party to verify the user's credentials. Additional descriptions of the financial score evaluation system and operations performed by the financial score evaluation system are provided in the paragraphs below and are illustrated in at least Figures 1-6.

Figure 1 is a network environment 100 for evaluating the financial score of a user in accordance with one embodiment. Network environment 100 includes a financial score evaluation system 102 that is communicatively connected to an electronic device 110 of a user 111, a wearable device 112, an online retailer system 122, and a financial institution system 132 via a network 106.

In the embodiment of figure 1, electronic device 110 is a smartphone configured to provide a user such as user 111 with frontend interfaces to provide a financial score of user 111 and components of the financial score for display. In the embodiment of figure 1, electronic device 110 is a smartphone. Additional examples of electronic devices include, but are not limited to, laptop computers, tablet computers, smart watches, virtual reality systems, augmented reality systems, as well as similar electronic devices having a processor operable to provide the financial score of user 111 and components of the financial score for display.

Wearable device 112 is any electronic device having one or more sensors configured to obtain one or more health related (physical or psychological) measurements of user 111. In the embodiment of figure 1, wearable device and other sensors (not shown) are configured to dynamically monitor physical activities and other health related metrics of user 112, such as but not limited to, the heart rate of user 112, the body temperature of user 112, the breathing patterns of user 112, the sleeping cycles of user 112, the BMI of user 112, the number of steps taken by user 112, the distance traveled by user 112 on foot or via an exercise machine, the number of calories taken in by user 112, the blood pressure of user 112, the emotional or psychological state of user 112, and other types of health related metrics of user 112. In the embodiment of figure 1, electronic device 110 also contains sensors configured to dynamically monitor metrics related to the health of user 112. Health data measured by the sensors are provided to financial score evaluation system 102.

Financial score evaluation system 102 may be formed from one or more work management stations, server systems, desktop computers, laptop computers, tablet computers, smartphones, smart watches, virtual reality systems, augmented reality systems, as well as similar electronic devices having one or more processors operable to obtain data used to determine different components of the user's financial score (e.g., health data, credit data, environment data, and world data), and determine the financial score based on a combination of the different components.

In the embodiment of figure 1, financial score evaluation system 102 receives health data from wearable device 112, and dynamically updates one or more metrics of the user's health score based on the newly received health data. For example, where financial score evaluation system 102 receives health data indicating that the user has walked 2,000 steps in the past hour, has a body temperature of 98° Fahrenheit, and has a systolic blood pressure of 180 mm HG and a diastolic blood pressure of 120 mm HG, financial score evaluation system 102 updates the health score of user 111 to account for the number of steps that user 112 has walked in the last hour, the body temperature of user 112, and the blood pressure of user 112.

Financial score evaluation system 102 is also receives credit data of user 111 (e.g., from electronic device 110 or from electronic devices of financial institutions). For example, in the embodiment of figure 1, financial score evaluation system 102 (with the approval of user 111) receives data associated with financial transactions made via electronic device 110, and dynamically determines and updates the user's credit score based on the number of financial transactions, the size of the financial transactions, the number of denied financial transactions, and other metrics associated with the user's credit score. Similarly, financial score evaluation system 102 also receives environment data of user 111 (e.g., from electronic device 110), and world data (e.g., from systems of news agencies). Financial score evaluation system 102 performs operations described herein to determine and update the credit score of user 111, environment score of user 111, and world score 111 based on the newly received data. Financial score evaluation system 102 determines a financial score of user 111 based on a combination of different components of the financial score. For example, financial score evaluation system 102 aggregates the health score of user 111, the credit score of user 111, the environment score of user 111, and world score to form the financial score of user 111. In some embodiments, financial score evaluation system 102 applies different weights to different components of the financial score of user 111. Additional descriptions of operations performed by financial score evaluation system 102 and other financial score evaluation systems are provided herein, and are illustrated in at least figures 2A-2C, 5, and 6.

Financial score evaluation system 102 includes or is communicatively connected to a storage medium, such as storage medium 104. Storage medium 104 stores instructions, which when executed by one or more processors of financial score evaluation system 102, cause the processors to perform the foregoing operations as well as other operations described herein. Storage medium 104, in addition to storing executable instructions, also stores the financial score of user 111 and (with the user's permission) data indicative of different components of the financial score of user 111. Storage medium 104 may be formed from data storage components such as, but not limited to, read-only memory (ROM), random access memory (RAM), flash memory, magnetic hard drives, solid state hard drives, CD-ROM drives, DVD drives, floppy disk drives, as well as other types of data storage components and devices. In some embodiments, storage medium 104 includes multiple data storage devices. In further embodiments, the multiple data storage devices may be physically stored at different locations. In one of such embodiments, the data storage devices are components of a server station, such as a cloud server. In another one of such embodiments, the data storage devices are components of financial score evaluation system 102.

In the embodiment of figures 1, financial score evaluation system 102 provides the most up-to-date financial score of user 111 and data indicating different components and different metrics of the financial score to electronic device 110. In some embodiments, financial score evaluation system 102 also provides recommendations on how to improve one or more metrics or components of the financial score of user 112 to electronic device 110, where the recommendations are provided for display on electronic device 110.

In the embodiment of figure 1, financial score evaluation system 102 also provides the financial score of user 112 to third party systems such as online retailer system 122 and financial institution system 132. For example, financial institution system 132, in response to receiving an application from user 111 to apply for a 30-year mortgage, requests financial score evaluation system 102 to provide the financial score of user 111 to evaluate whether user 111 qualifies for the mortgage and the terms of the mortgage. In some embodiments, financial score evaluation system 102 provides not only the up-to-date financial score of user 111, financial score evaluation system 102 also provides historical financial scores of user 111, such as the financial score of user 111 over a week, a month, a year, or a different period of time. Continuing with the foregoing example, financial score evaluation system 102 provides financial institution system 132 with a six-month history of the daily financial scores of user 111 to help financial institution system 132 determine whether user 111 qualifies for the mortgage and the terms of the mortgage. Further, financial score evaluation system 102 updates the credit score and financial score of user 111 based on whether the mortgage is approved (or denied) by financial institution system 132 and the terms of the mortgage.

Network 106 can include, for example, any one or more of a cellular network, a satellite network, a personal area network (PAN), a local area network (LAN), a wide area network (WAN), a broadband network (BBN), an RFID network, a Bluetooth network, a device-to-device network, the Internet, and the like. Further, network 106 can include, but is not limited to, any one or more of the following network topologies, including a bus network, a star network, a ring network, a mesh network, a star-bus network, a tree or hierarchical network, or similar network architecture. Network 106 may be implemented using different protocols of the internet protocol suite such as TCP/IP. Network 106 includes one or more interfaces for data transfer. In some embodiments, network 106 includes a wired or wireless networking device (not shown) operable to facilitate one or more types of wired and wireless communication between financial score evaluation system 102, electronic device 110, systems 122 and 132, as well as other electronic devices (not shown) and systems (not shown) communicatively connected to network 106. Examples of the networking device include, but are not limited to, wired and wireless routers, wired and wireless modems, access points, as well as other types of suitable networking devices described herein. Examples of wired and wireless communication include Ethernet, WiFi, Cellular, LTE, GPS, Bluetooth, and RFID, as well as other types of communication modes described herein.

Although Figure 1 illustrates one electronic device 110, in some embodiments, financial score evaluation system 102 is communicatively connected to multiple electronic devices, each configured to receive a financial score for a used of the electronic device. In one or more of such embodiments, financial score evaluation system 102 is configured to perform operations described herein to concurrently and/or sequentially determine multiple financial scores of different users. In that regard, where financial score evaluation system 102 receives multiple requests to determine the financial scores of different users (not shown), financial score evaluation system 102 is configured to assign different backend electronic devices tasks described herein to determine the financial scores of different (or different groups) of users to balance the workload among the backend electronic devices. Similarly, in some embodiments, financial score evaluation system 102 includes multiple electronic devices (not shown) configured to perform different operations described herein. For example, financial score evaluation system 102 is configured to assign a first backend electronic device (not shown) tasks to determine the health score of user 111, assign a second backend electronic device (not shown) tasks to determine the credit score of user 111, assign a third backend electronic device (not shown) tasks to determine the environment score of user 111, and assign a fourth backend electronic device (not shown) tasks to determine the world score to balance the workload among the four backend electronic devices.

Although figure 1 illustrates financial score evaluation system 102 as a backend system, in some embodiments, financial score evaluation system 102 is a component of electronic device 110 or another user electronic device. In one or more of such embodiments, financial score evaluation system 102 controls one or more processors of electronic device 110 to perform the operations described herein to determine the financial score of user 111 and provide the financial score for display on electronic device 110.

Figure 2A is an illustration of a process 200 to determine a user's health score. Although the operations in process 200 are shown in a particular sequence, certain operations may be performed in different sequences or at the same time where feasible.

At block 202, a user such as user 111 of figure 1 engages in physical activity, such as lifting weights. At block 204, sensors, such as sensors of wearable device 112 and electronic device 110 of figure 1, detect the user's biometrics (e.g., the user's heart rate, breathing pattern, blood pressure, calories burned, breathing pattern, and other biometrics ) during the physical activity. At block 206, data indicative of the user's biometrics are provided to a financial score evaluation system, such as financial score evaluation system 102 of figure 1.

At block 208, a determination of whether the user has an existing health score is made. Process 200 proceeds to block 210 if the user does not have a health score, and the financial score evaluation system determines the user's health score based on the user's biometrics. For example, where the user's heart rate, breathing pattern, blood pressure, calories burned, and breathing pattern form five different metrics of the user's health score, each metric is dynamically updated to reflect the user's current biometrics. In some embodiments, the financial score evaluation system compares each metric with a historic metric, a baseline metric, or a desired metric, and determines a value or score associated with each metric. For example, where the user has burned 200 calories out of a daily recommended 400 calories burned from weightlifting, the financial score evaluation system assigns a value associated with the calories burned from weightlifting metric (e.g., 50 points out of 100 points), and dynamically increases the value as the user continues to burn calories from weightlifting.

Alternatively, and at block 208, process 200 proceeds to block 212 if the user has an existing health score. At block 212, financial score evaluation system updates the user's health score based on the user's biometrics. Process 200 then proceeds to block 214, and a determination of whether the user has an existing financial score is made. Process 200 proceeds to block 216 if the user does not have a financial score, and the financial score evaluation system determines the user's financial score based on the user's health score. Alternatively, and at block 214, process 200 proceeds to block 218 if the user has an existing financial score. At block 218, the financial score evaluation system updates the financial score to reflect the user's current health score, which in turn is based on the user's biometrics during and after the user's weight training session. Process 200 then proceeds to block 220. At block 220, a determination is made on whether the financial score evaluation system has received new biometrics data from the sensors. Process 200 ends if the financial score evaluation system does not receive any new biometrics data from the sensors or does not receive any new biometrics data within a threshold period of time. Alternatively, process 200 proceeds to block 206 if the financial score evaluation system receives additional biometrics data within the threshold period of time, and some of the operations described herein are repeated.

Figure 2B is an illustration of a process 221 to determine a user's environment score. Although the operations in process 221 are shown in a particular sequence, certain operations may be performed in different sequences or at the same time where feasible.

At block 222, a user such as user 111 of figure 1 arrives at a new location, such as a vacation destination. At block 224, a financial score evaluation system, such as financial score evaluation system 102 of figure 1 obtains environment data of the new location. In some embodiments, the environment data are obtained from the user's electronic device, such as electronic device 110 of figure 1. In some embodiments, the environment data are obtained from systems of local weather agencies, systems of local news agencies, systems of local first responders and law enforcement agencies, and other system and devices that contain up-to-date information regarding the new location.

At block 226, environment data (e.g., the weather at the location, the precipitation at the location, the air pollution at the location, the crime rate within a threshold region of the location, etc.) are provided to a financial score evaluation system. At block 228, a determination of whether the user has an existing environment score is made. Process 221 proceeds to block 230 if the user does not have an environment score, and the financial score evaluation system determines the user's environment score based on the obtained environment data. For example, where the local weather, the local precipitation, the local air pollution, and the local crime rate form four different metrics of the user's environment score, each metric is dynamically updated to reflect the user's current environment score.

In some embodiments, the financial score evaluation system compares each metric with a historic metric, a baseline metric, or a desired metric, and determines a value or score associated with each metric. For example, where the current location of the user is experiencing a crime surge with robberies up 100% from the year before, the financial score evaluation system assigns a value associated with the crime rate metric (e.g., 10 points out of 75 points), and dynamically increases the value during hours of the day when robberies most often occur or when the user is determined to be at a less secure location, and dynamically decreases the value during hours of the day when robberies least often occur, or when the user is determined to be at a more secure location (e.g., in a gated resort). In some embodiments, the financial score evaluation system assigns different weights to different metrics used to calculate the user's environment score. For example, when the user is at a nightclub, the financial score evaluation system assigns a first weight to the crime rate at the user's location, and assigns a second and lesser weight to the local weather. However, when the user is in a gated resort, the financial score evaluation system assigns a greater weight to an emergency weather metric (e.g., incoming hurricane) than to the crime rate.

Alternatively, and at block 228, process 221 proceeds to block 232 if the user has an existing environment score. At block 212, financial score evaluation system updates the user's environment score based on the user's environment data. Process 221 then proceeds to block 234, and a determination of whether the user has an existing financial score is made. Process 221 proceeds to block 236 if the user does not have a financial score, and the financial score evaluation system determines the user's financial score based on the user's environment score. Alternatively, and at block 234, process 221 proceeds to block 238, if the user has an existing financial score. At block 238, the financial score evaluation system updates the financial score to reflect the user's current environment score, which in turn is based on the user's environment data as the user traverses the location and nearby areas. Process 221 then proceeds to block 240. At block 240, a determination is made on whether the financial score evaluation system has received new environment data. Process 221 ends if the financial score evaluation system does not receive any new environment data or does not receive any new environment data within a threshold period of time. Alternatively, process 221 proceeds to block 226 if the financial score evaluation system receives additional environment data within the threshold period of time, and some of the operations described herein are repeated.

Figure 2C is an illustration of a process 241 to determine a world score. Although the operations in process 241 are shown in a particular sequence, certain operations may be performed in different sequences or at the same time where feasible.

At block 242, the New York Stock Exchange (NYSE) opens at 8:30AM Central Time on Tuesday, January 17, 2023. At block 224, a financial score evaluation system, such as financial score evaluation system 102 of figure 1 obtains world data associated with the NYSE and stocks listed on the NYSE, including their trading volumes, trading prices, 52 week high, 52 week low, investment related news, and other world data related to the NYSE and stocks listed on the NYSE. In some embodiments, the world data are obtained from the user's electronic device, such as electronic device 110 of figure 1. In some embodiments, the world data are obtained from systems of financial agencies, brokerage firms, governmental banking reserves, companies listed on the NYSE, and other systems and devices that contain up-to-date information regarding the world data associated with the NYSE and stocks listed on the NYSE.

At block 246, world data associated with the NYSE and stocks listed on the NYSE are provided to a financial score evaluation system. At block 248, a determination of whether the user has an existing world score is made. Process 221 proceeds to block 250 if the user does not have a world score, and the financial score evaluation system determines the world score based on the obtained world data. For example, where the current value of the NYSE composite index, current value of the NASDAQ 100 index, the current value of the Dow Jones Industrial Average, the value of the user's stock listed on the NYSE, and the government yield form five different metrics of the world score, each metric is dynamically updated to reflect the user's current world score.

In some embodiments, the financial score evaluation system dynamically determines and adjusts a value or score associated with each metric. For example, where the Federal Reserve has just announced a higher than anticipated interest rate increase, the financial score evaluation system dynamically degreases the value of associated with the government yield metric (e.g., from 20 points out of 75 points to 5 points out of 75 points). Alternatively, where the user holds 100 shares of XYZ, and XYZ has released earnings that are better than anticipated, the financial score evaluation system dynamically increase the value associated with the user's stock (e.g., from 50 points out of 80 points to 70 points out of 80 points). In some embodiments, the financial score evaluation system assigns different weights to different metrics used to calculate the world score. For example, the metric that measures the performance of the user's stocks is assigned a first weight that is higher than the metric that measures the performance of the NASDAQ 100 index.

Alternatively, and at block 248, process 241 proceeds to block 252 if the user has an existing world score. At block 252, financial score evaluation system updates the world score based on the world data. Process 241 then proceeds to block 254, and a determination of whether the user has an existing financial score is made. Process 221 proceeds to block 256 if the user does not have a financial score, and the financial score evaluation system determines the user's financial score based on the world score. Alternatively, and at block 254, process 241 proceeds to block 258, if the user has an existing financial score. At block 258, the financial score evaluation system updates the financial score to reflect the current world score. Process 241 then proceeds to block 260. At block 260, a determination is made on whether financial score evaluation system has received new world data. Process 241 ends if the financial score evaluation system does not receive any new world data from the sensors or does not receive any new world data within a threshold period of time. Alternatively, process 241 proceeds to block 246 if the financial score evaluation system receives additional world data within the threshold period of time, and some of the operations described herein are repeated.

Figure 3A is an illustration of an exemplary user interface containing a user's financial score and components of the user's financial score displayed on a smartphone 302. In the embodiment of figure 3A, the user's financial score includes four different components, the user's health score, the user's credit score, the user's environment score, and world score. Further, each component is represented by a value and a total value. In the embodiment of figure 3A, the user's health score has a value of 350 out of a total value of 500, the user's credit score has a value of 140 out of a total value of 300, the user's environment score has a value of 85 out of a total value of 100, and the world score has a value of 65 out of a total value of 100. Further, a total value of the user's financial score is 640 out of a total value of 1,000. In the embodiment of figure 3A, the total value of the user's financial score is the sum of each component of the user's financial score. In some embodiments, different components of the user's financial score are weighed differently. For example, the user's credit score is weighed twice as much as the world score while the user is staying home, however, the value of the user's environment score is weighed twice as much as the user's credit score, and the world data is weighted the same as the user's credit score if the user has traveled to an international conflict zone.

Each component of the user's financial score is subject to change. For example, the value of the user's environment score dynamically increases if the user visits a national park, and dynamically decreases if the user is near an international conflict zone. Similarly, the value of the user's health score dynamically and (gradually) increases after a week of dieting and exercising, and dynamically decreases after the user experiences cardiac arrest and is sent to a hospital. In that regard, one or more components of the user's financial score are dynamically changing, and the values associated with each component of the user's financial score, and the total value associated with the user's dynamic score are also dynamically changing. Smartphone 302 is configured to periodically or dynamically store the user's financial score and corresponding values associated with the user's financial score at different times. Further, smartphone 302, in response to a request to provide the user's financial score, such as to a banking institution to complete a financial transaction or to verify the user's financial credentials, provides the user's financial score to a third-party device, such as the system of the banking institution.

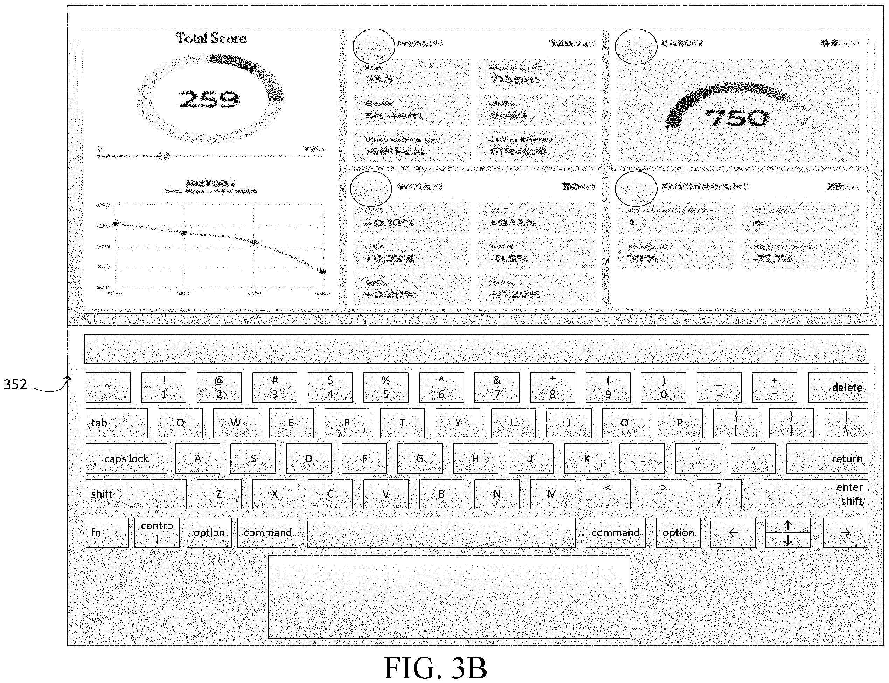

Figure 3B is an illustration of another exemplary user interface containing a user's financial score and components of the user's financial score displayed on a laptop device 352. In the embodiment of figure 3B, laptop device 352 provides additional information regarding each component of the user's health score, the user's credit score, the user's environment score, and the world score. For example, the user's health score component contains additional metrics that indicate the user's BMI is 23.3, the user's resting heart rate is 71 beats per minute, the user has slept for 5 hours and 44 minutes, the user has taken 9660 steps, the user's resting energy is 1,681 Kcal, and the user has expended 606 Kcal of active energy. In the embodiment of figure 3B, the financial score evaluation system dynamically analyzes the user's health data associated with each metric, and dynamically adjusts the values of each metric based on the most recent health data regarding the metrics. For example, financial score evaluation system 102 dynamically seeks to obtain the user's health data while the user is engaged in physical activity, and dynamically provides laptop device 352 with the most up-to-date values associated with the user's BMI, resting heart rate, sleep duration, steps taken, resting energy, and active energy, for display.

In some embodiments, the financial score evaluation system displays (or requests) recommendations to improve certain components of the user's score on the interfaces illustrated in figures 3A and 3B. For example, the financial score evaluation system, in response to a determination that the user has not exercised in a week, requests smartphone 302 to display a recommendation to the user to engage in light exercise, such as going for a walk. In some embodiments, the financial score evaluation system dynamically determines changes to one or more metrics of the user's health data (e.g., the number of steps taken by the user) while the user is walking, and requests smartphone 302 to display up-to-date biometrics of the user on smartphone 302. In some embodiments, the financial score evaluation system also dynamically updates the user's health score, as well as the user's financial score based on improvements to one or more of the user's biometrics while the user is walking.

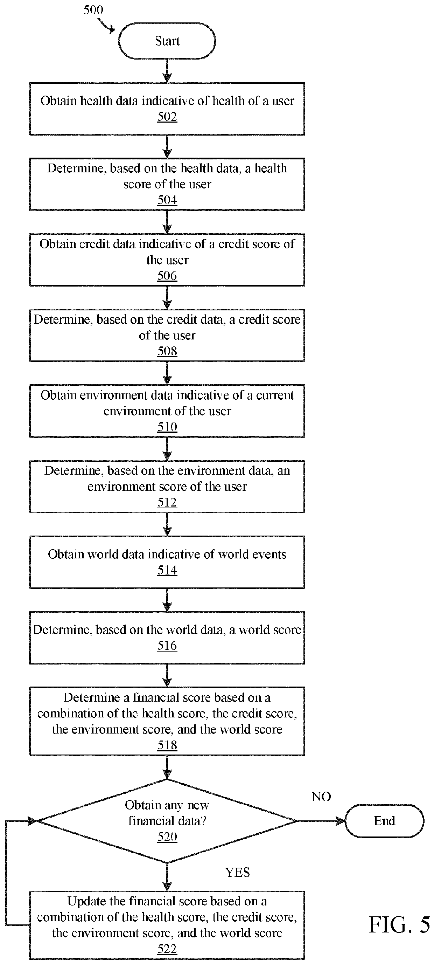

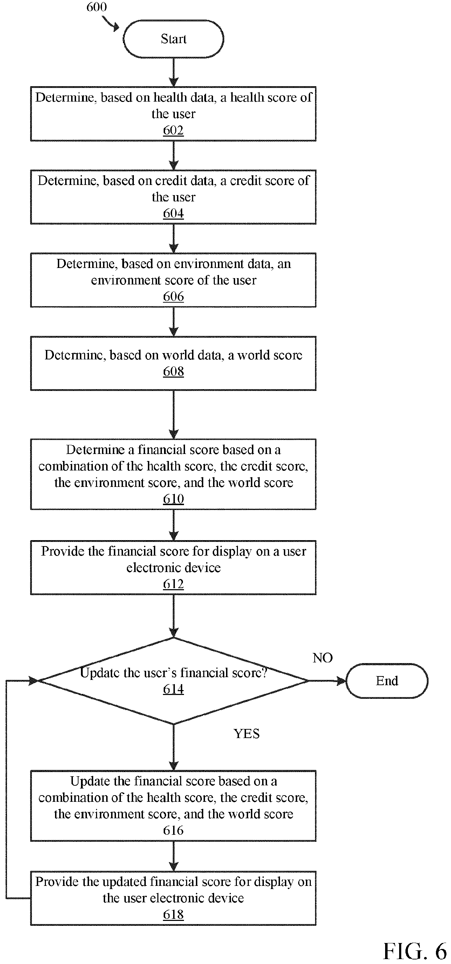

Although figures 3A and 3B illustrate four components of the user's financial score, in some embodiments, the user's financial score includes a different number of components and subcomponents. For example, in some embodiments, the investment data form a fifth category, and an investment score is generated for the user's investment data. Further, the user's financial score is determined from the combination of the user's financial score, health score, credit score, environment score, and world score. Additional descriptions of operations performed by the financial score evaluation system to determine and provide for display the user's financial score are provided herein, and are further illustrated in figures 5 and 6.

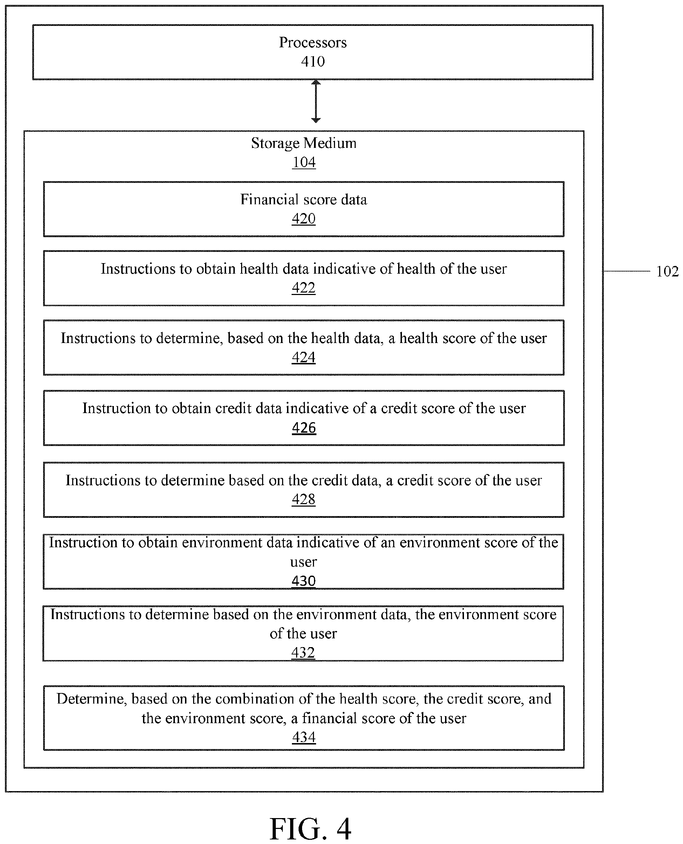

Figure 4 is a system diagram of financial score evaluation system 102 of Figure 1 in accordance with one embodiment. Financial score evaluation system 102 includes or is communicatively connected to storage medium 104 and processors 410. The user's health data, credit data, environment data, and world data (collectively "financial score data") are stored at location 420 of storage medium 104. Instructions to obtain health data indicative of the health of a user are stored at location 422. Further, instructions to determine, based on the health data, a health score of the user are stored at location 424. Further, instructions to obtain credit data indicative of a credit score of the user are stored at location 426. Further, instructions to determine, based on the credit data, a credit score of the user are stored at location 428. Further, instructions to obtain environment data indicative of a current environment of the user are stored at location 430. Further, instructions to determine, based on the environment data, an environment score of the user are stored at location 432. Further, instructions to determine, based on the combination of the health score, the credit score, and the environment score, a financial score of the user are stored at location 434. Further, instructions to perform operations described herein and shown in at least Figure 5 are also stored in storage medium 104.

Figure 5 is a flow chart illustrating a process 500 to evaluate a user's financial score in accordance with one embodiment. Although the operations in process 500 are shown in a particular sequence, certain operations may be performed in different sequences or at the same time where feasible. Further, although process 500 is described to be performed by processors of financial score evaluation system 102 of figure 1, it is understood that processors of other financial score evaluation systems are also operable to perform process 500.

At block 502, a financial score evaluation system, such as financial score evaluation system 102 of figure 1 obtains health data indicative of the health of a user. In the embodiment of figure 1, financial score evaluation system 102 obtains data indicative of the biometrics of user 111 from wearable device 112 and from electronic device 110. At block 504, the financial score evaluation system determines, based on the health data, a health score of he user. Figure 2A provides an illustration of process 201 performed by the financial score evaluation system to determine the health score of the user. Further, figure 3B provides an illustration of a health score of the user that is determined based on a combination of multiple metrics associated with the user's health data including the user's resting heartbeat, sleep over a threshold period, number of steps taken, resting energy, and active energy.

At block 506, the financial score evaluation system obtains credit data indicative of a credit score of the user. At block 508, the financial score evaluation system determines, based on the credit data, a credit score of the user. For example, the financial score evaluation system obtains (with the user's consent) financial transaction histories of the user, the user's daily expenditures, the total amount, and changes from historical expenditures, and determines the user's credit score based on the financial transaction histories of the user, the user's daily expenditures, the total amount, and changes from historical expenditures. It is noted that the credit data obtained by the financial score evaluation system and utilized to determine the user's credit score are dynamic data. As such, the user's credit score is also a dynamic score that is changes within a period of time traditional static credit scores remain constant.

At block 510, the financial score evaluation system obtains environment data indicative of a current environment of the user. At block 512, the financial score evaluation system determines, based on the environment data, an environment score of the user. For example, the financial score evaluation system obtains the local weather, local traffic patterns, and local crime date within a region of the user's location, and determines based on the obtained data, the environment score of the user. Figure 2B provides an illustration of process 221 performed by the financial score evaluation system to determine the environment score of the user. At block 514, the financial score evaluation system obtains world data indicative of world events. At block 516, the financial score evaluation system determines, based on the world data, a world score. For example, the financial score evaluation system obtains information regarding current geopolitical events, economic trends, regional and international conflicts, major financial indices, and other data indicative of regional and global events or trends, and determines the world score based on the obtained data. Figure 2C provides an illustration of process 241 performed by the financial score evaluation system to determine the world score.

At block 518, the financial score evaluation system determines a financial score of the user based on a combination of the user's health score, the credit score, the environment score, and the world score. In some embodiments, the financial score evaluation system assigns different weights to different components of the user's financial score. In some embodiments, the financial score evaluation system dynamically adjusts the weights of different components of the user's financial score based on the user's current health, the user current location, and local, regional, and international events.

At block 520, a determination of whether to obtain any new financial data is made. Process 500 ends if a determination not to obtain any new financial data is made. Alternatively, at block 520, and in response to a determination to obtain new financial data, process 500 proceeds to block 522, and the financial score evaluation system obtains one or more of new health data, credit data, environment data, and world data. The financial score evaluation system correspondingly updates one or more of the user's health score, credit score, environment score, and world score, as well as the total financial score of the user. It is understood that block 522 represents similar or identical operations performed at blocks 502, 504, 506, 508, 510, 512, 514, 516, and 518 to simplify the illustration of process 500, and to reduce repetition. Process 500 then returns to block 520.

Figure 6 is a flowchart of another process 600 to evaluate a user's financial score, where process 600 is performed by the financial score evaluation system, where the financial score evaluation system resides on an electronic device of the user, such as electronic device 110 of figure 1. Although the operations in process 600 are shown in a particular sequence, certain operations may be performed in different sequences or at the same time where feasible. Further, although process 600 is described to be performed by processors of electronic device 110 of figure 1, it is understood that processors of other electronic devices are also operable to perform process 600.

At block 602, the financial score evaluation system determines, based on health data of a user, a health score of the user. At block 604, the financial score evaluation system determines, based on the credit data of the user, a credit score of the user. At block 606, the financial score evaluation system determines, based on environment data of the user, an environment score of the user. At block 608, the financial score evaluation system determines, based on world data, a world score. At block 610, the financial score evaluation system determines a financial score of the user based on a combination of the user's health score, the credit score, the environment, and the world data. Operations performed at blocks 602, 604, 606, 608, and 610 are similar or identical to the operations performed at blocks 502, 506, 510, 514, and 518 of process 500, which are described herein.

At block 612, the financial score evaluation system provides the financial score for display on a user electronic device, such as smartphone 302 of figure 3A or laptop device 352 of figure 3B. In that regard, figures 3A and 3B illustrate exemplary user interfaces containing the user's financial score, and components of the user's financial score. Process 600 proceeds to block 614, and a determination of whether to update the user's financial score is made. Process 600 ends if the financial score evaluation system determines not to update the user's financial score. Alternatively, and at block 614, process 600 proceeds block 616, and the financial score evaluation system updates the user's financial score based on the combination of the user's health score, credit score, environment score, and the world score. At block 618, the financial score evaluation system provides the updated financial score of the user for display on the user electronic device, such as smartphone 302 of figure 3A or laptop device 352 of figure 3B. Process then returns to block 614.

As used herein, the singular forms "a," "an," and "the" are intended to include the plural forms as well, unless the context clearly indicates otherwise. It will be further understood that the terms "comprise" and/or "comprising," when used in this specification and/or in the claims, specify the presence of stated features, steps, operations, elements, and/or components, but do not preclude the presence or addition of one or more other features, steps, operations, elements, components, and/or groups thereof. In addition, the steps and components described in the above embodiments and figures are merely illustrative and do not imply that any particular step or component is a requirement of a claimed embodiment.

The following paragraphs provide a list of additional embodiments which may serve as basis for claims in this application or in any subsequently filed divisional application(s).

Embodiment 1: A computer-implemented method to determine a financial score, the method comprising: obtaining health data indicative of health of a user; determining, based on the health data, a health score of the user; obtaining credit data indicative of a credit score of the user; determining, based on the credit data, a credit score of the user; obtaining environment data indicative of a current environment of the user; determining, based on the environment data, an environment score of the user; and determining, based on a combination of the health score, the credit score, and the environment score, a financial score of the user.

Embodiment 2: The computer-implemented method of Embodiment 1, further comprising: obtaining world data indicative of one or more events around the world; determining, based on the world data, a world score; and determining the financial score of the user based on the world score.

Embodiment 3: The computer-implemented method of Embodiment 1, further comprising: obtaining at least one of new health data, new credit data, and new environment data; and in response to receiving at least one of the new health data, the new credit data, and the new environment data, dynamically updating the financial score of the user.

Embodiment 4: The computer-implemented method of Embodiment 3, further comprising: determining an activity of the user; and in response to determining the activity of the user, requesting new health data indicative of the health of the user; and updating the health score to be reflective of the new health data.

Embodiment 5: The computer-implemented method of Embodiment 3, further comprising: determining a new location of the user; and in response to determining the current location of the user, requesting the new environment data, wherein the new environment data are indicative of the new environment of the user; and updating the environment score to be reflective of the new environment data.

Embodiment 6: The computer-implemented method of Embodiment 3, further comprising: determining a change to the credit score; and in response to determining the change to the credit score, requesting the new credit data; and updating the credit score to be reflective of the new credit data.

Embodiment 7: The computer-implemented method of Embodiment 1, further comprising: applying a first weight to the health score of the user; applying a second weight to the credit score of the user; and applying a third weight to the environment score of the user.

Embodiment 8: The computer-implemented method of Embodiment 1, further comprising providing the financial score of the user for display on an electronic device.

Embodiment 9: The computer-implemented method of Embodiment 8, further comprising providing the health score of the user, the credit score of the user, and the environment score for display on the electronic device.

Embodiment 10: The computer-implemented method of Embodiment 9, further comprising: providing a first set of metrics associated with the health score of the user for display; providing a second set of metrics associated with the credit score of the user for display; and providing a third set of metrics associated with the environment for display.

Embodiment 11: The computer-implemented method of Embodiment 10, further comprising: determining a recommendation to improve at least one of the health score, the credit score, and the environment score; and providing the recommendation for display on the electronic device.

Embodiment 12: The computer-implemented method of Embodiment 8, further comprising: tracking a progress to improve the at least one of the health score, the credit score, and the environment score; and providing an indication of the progress for display on the electronic device.

Embodiment 13: The computer-implemented method of Embodiment 1, further comprising providing the financial score to an electronic device, wherein the financial score is used to determine a financial credential of the user.

Embodiment 14: The computer-implemented method of Embodiment 1, wherein determining the health score of the user comprises determining, via a first electronic device, the health score of the user, wherein determining the credit score of the user comprises determining, via a second electronic device, the credit score of the user, and wherein determining the environment score comprises determining, via the third electronic device, the environment score.

Embodiment 15: The computer-implemented method of Embodiment 14, further comprising providing the financial score of the user to an electronic device of the user.

Embodiment 16: A financial score evaluation system, comprising: a storage medium; and one or more processors configured to: obtain health data indicative of health of a user; determine, based on the health data, a health score of the user; obtain credit data indicative of a credit score of the user; determine, based on the credit data, a credit score of the user; obtain environment data indicative of a current environment of the user; determine, based on the environment data, an environment score of the user; obtain world data indicative of one or more events around the world; determine, based on the world data, a world score; and determine, based on a combination of the health score, the credit score, the environment score, and the world data, a financial score of the user.

Embodiment 17: The financial score evaluation system of Embodiment 16, wherein the one or more processors are further configured to: obtain at least one of new health data, new credit data, new environment data, and new world data; and in response to receiving at least one of the new health data, the new credit data, the new environment data, and new world data, dynamically update the financial score of the user.

Embodiment 18: The financial score evaluation system of Embodiment 17, wherein the one or more processors are further configured to: determining an activity of the user; and in response to determining the activity of the user, requesting new health data indicative of the health of the user; and updating the health score to be reflective of the new health data.

Embodiment 19: The financial score evaluation system of Embodiment 17, wherein the one or more processors are further configured to: determine a new location of the user; and in response to determining the current location of the user, request the new environment data, wherein the new environment data are indicative of the new environment of the user; and update the environment score to be reflective of the new environment data.

Embodiment 20: The financial score evaluation system of Embodiment 17, wherein the one or more processors are further configured to: determine a change to the credit score; and in response to determining the change to the credit score, request the new credit data; and update the credit score to be reflective of the new credit data.

Embodiment 21: The financial score evaluation system of Embodiment 17, wherein the one or more processors are further configured to: apply a first weight to the health score of the user; apply a second weight to the credit score of the user; and apply a third weight to the environment score of the user.

Embodiment 22: A non-transitory machine-readable medium containing instructions, which when executed by one or more processors, cause the one or more processors to perform operations comprising: obtaining health data indicative of health of a user; determining, based on the health data, a health score of the user; obtaining credit data indicative of a credit score of the user; determining, based on the credit data, a credit score of the user; obtaining environment data indicative of a current environment of the user; determining, based on the environment data, an environment score of the user; obtaining world data indicative of one or more events around the world; determining, based on the world data, a world score; and determining, based on a combination of the health score, the credit score, the environment score, and the world data, a financial score of the user.

Embodiment 23: The computer-implemented method to determine a financial score, comprising: determining, health data indicative of health of a user, a health score of the user; determining, based on credit data indicative of a credit score of the user, a credit score of the user; determining, based on environment data indicative of a current environment of the user, an environment score of the user; and determining, based on a combination of the health score, the credit score, and the environment score, a financial score of the user; and providing the financial score to an electronic device of the user.

Embodiment 24: The computer-implemented method of Embodiment 23, further comprising: obtaining at least one of new health data, new credit data, and new environment data; and in response to receiving at least one of the new health data, the new credit data, and the new environment data, dynamically updating the financial score of the user; and providing the new financial score to the electronic device of the user.

Embodiment 25: The computer-implemented method of Embodiment 23, wherein determining the health score of the user comprises determining, via a first electronic device, the health score of the user, wherein determining the credit score of the user comprises determining, via a second electronic device, the credit score of the user, and wherein determining the environment score comprises determining, via the third electronic device, the environment score.

Embodiment 26: The computer-implemented method of Embodiment 23, further comprising dynamically balancing workloads associated with determining the health data of the user, the credit data of the user, and the environment data among a plurality of electronic devices.

## Claims

1. A computer-implemented method to determine a financial score, the method comprising:
obtaining health data indicative of health of a user;
determining, based on the health data, a health score of the user;
obtaining credit data indicative of a credit score of the user;
determining, based on the credit data, a credit score of the user;
obtaining environment data indicative of a current environment of the user;
determining, based on the environment data, an environment score of the user; and
determining, based on a combination of the health score, the credit score, and the environment score, a financial score of the user.

2. The computer-implemented method of claim 1, further comprising:
obtaining world data indicative of one or more events around the world;
determining, based on the world data, a world score; and
determining the financial score of the user based on the world score.

3. The computer-implemented method of claim 1, further comprising:
obtaining at least one of new health data, new credit data, and new environment data; and
in response to receiving at least one of the new health data, the new credit data, and the new environment data, dynamically updating the financial score of the user.

4. The computer-implemented method of claim 3, further comprising:
(i) determining an activity of the user; and
in response to determining the activity of the user,
requesting new health data indicative of the health of the user; and updating the health score to be reflective of the new health data, or
(ii) determining a new location of the user; and in response to determining the current location of the user,
requesting the new environment data, wherein the new environment data are indicative of the new environment of the user; and
updating the environment score to be reflective of the new environment data,
or
(iii) determining a change to the credit score; and
in response to determining the change to the credit score,
requesting the new credit data; and
updating the credit score to be reflective of the new credit data.

5. The computer-implemented method of claim 1, further comprising:
applying a first weight to the health score of the user;
applying a second weight to the credit score of the user; and
applying a third weight to the environment score of the user.

6. The computer-implemented method of claim 1, further comprising providing the financial score of the user for display on an electronic device.

7. The computer-implemented method of claim 6, further comprising providing the health score of the user, the credit score of the user, and the environment score for display on the electronic device.

8. The computer-implemented method of claim 7, further comprising:
providing a first set of metrics associated with the health score of the user for display;
providing a second set of metrics associated with the credit score of the user for display; and
providing a third set of metrics associated with the environment for display.

9. The computer-implemented method of claim 8, further comprising:
determining a recommendation to improve at least one of the health score, the credit score, and the environment score; and
providing the recommendation for display on the electronic device.

10. The computer-implemented method of claim 6, further comprising:
tracking a progress to improve the at least one of the health score, the credit score, and the environment score; and
providing an indication of the progress for display on the electronic device.

11. The computer-implemented method of claim 1, further comprising providing the financial score to an electronic device, wherein the financial score is used to determine a financial credential of the user.

12. The computer-implemented method of claim 1, wherein determining the health score of the user comprises determining, via a first electronic device, the health score of the user, wherein determining the credit score of the user comprises determining, via a second electronic device, the credit score of the user, and wherein determining the environment score comprises determining, via the third electronic device, the environment score.

13. A financial score evaluation system, comprising:
a storage medium; and
one or more processors configured to:
obtain health data indicative of health of a user;
determine, based on the health data, a health score of the user;
obtain credit data indicative of a credit score of the user;
determine, based on the credit data, a credit score of the user;
obtain environment data indicative of a current environment of the user;
determine, based on the environment data, an environment score of the user;
obtain world data indicative of one or more events around the world;
determine, based on the world data, a world score; and
determine, based on a combination of the health score, the credit score, the environment score, and the world data, a financial score of the user.

14. The financial score evaluation system of claim 13, wherein the one or more processors are further configured to:
obtain at least one of new health data, new credit data, new environment data, and new world data; and
in response to receiving at least one of the new health data, the new credit data, the new environment data, and new world data, dynamically update the financial score of the user.

15. A non-transitory machine-readable medium containing instructions, which when executed by one or more processors, cause the one or more processors to perform operations comprising:
obtaining health data indicative of health of a user;
determining, based on the health data, a health score of the user;
obtaining credit data indicative of a credit score of the user;
determining, based on the credit data, a credit score of the user;
obtaining environment data indicative of a current environment of the user;
determining, based on the environment data, an environment score of the user;
obtaining world data indicative of one or more events around the world;
determining, based on the world data, a world score; and
determining, based on a combination of the health score, the credit score, the environment score, and the world data, a financial score of the user.
